Europäisches Patentamt

European Patent Office

Office européen des brevets

(11) Numéro de publication: **0 305 280**
**A1**

## (12) DEMANDE DE BREVET EUROPEEN

(21) Numéro de dépôt: **88402135.3**

(22) Date de dépôt: **22.08.88**

(51) Int. Cl.⁴: **B 23 Q 16/00**
**B 23 Q 3/10**

(30) Priorité: **21.08.87 FR 8711804**

(43) Date de publication de la demande:
**01.03.89 Bulletin 89/09**

(84) Etats contractants désignés: **CH DE ES IT LI**

(71) Demandeur: **CAROSSINO FRERES, Société dite:
Société à Responsabilité Limitée
Centre Artisanal du Vert-Galant Rue des Oziers
F-95310 Saint-Ouen l'Aumone (FR)**

(72) Inventeur: **Carossino, André
88, Route de la Princesse
F-78430 Louveciennes (FR)**

(74) Mandataire: **Rodhain, Claude et al
Cabinet Claude Rodhain 30, rue la Boétie
F-75008 Paris (FR)**

(54) Cale adaptable aux rainures des tables de machines-outils.

(57) L'invention concerne une cale pour rainure de table de machine-outil destinée à définir un plan de référence orthogonal à celui de la surface de la table, ladite cale servant ainsi de butée pour le positionnement d'une pièce à usiner.

Cette cale est caractérisée en ce qu'un bloc (1) sensiblement parallélipipédique possédant deux faces (2 et 3) rigoureusement parallèles l'une (2) pour prendre appui sur la paroi de la rainure en T de la table, l'autre (3) pour servir de plan de référence à la pièce à usiner, ce bloc étant pourvu d'un talon (4) servant de support à une came à excentrique (8).

FIG.3

EP 0 305 280 A1

## Description

### CALE ADAPTABLE AUX RAINURES DES TABLES DE MACHINES-OUTILS

L'invention concerne une cale destinée à être introduite en partie dans les rainures de table de machines-outils pour constituer une butée en saillie formant un plan de référence pour les pièces à usiner, immobilisées par ailleurs par des dispositifs de bridage.

Il est souvent nécessaire de positionner la pièce à usiner par rapport à l'emplacement d'un outil, qu'il s'agisse d'un forret ou d'une fraise par exemple. Dans ce cas, il est usuel d'utiliser des cales que l'on introduit partiellement dans les rainures à section en T dont sont pourvues les tables de machines-outils. La partie émergente de ces cales est destinée à constituer une butée dont au moins l'une des faces doit être rigoureusement orthogonale au plan horizontal de la table afin de constituer un plan de référence pour le positionnement de la pièce à usiner qui est par ailleurs immobilisé dans cette position choisie par des dispositifs de bridage connus, en prise eux aussi dans les rainures en T de la table. Ces cales dénommées couramment "biaises" sont utilisées par paires et ont un profil complémentaire pour pouvoir, lorsqu'elles sont apariées, se coincer à force dans la largeur d'entrée de la rainure en T. Par conséquent ces cales biaises comportent nécessairement une face de référence rigoureusement perpendiculaire à leur épaisseur, la face opposée étant légèrement conique de manière à constituer, lorsque deux cales identiques sont juxtaposées tête-bêche, un bloc parallélipipédique. L'inconvénient majeur de ces cales connues réside, en raison de leur faible conicité, dans la difficulté de les assembler pour les loger dans la rainure. Il faut en effet s'y reprendre souvent plusieurs fois pour reconnaître le sens de la cale afin de l'associer à son homologue ce qui engendre des pertes de temps et des difficultés de manipulation.

En effet, la conicité donnée aux cales est essentiellement destinée à rattraper le jeu des rainures dont la largeur, sur une même table, n'est pas forcément rigoureuse. Toutefois, ce jeu étant relativement faible , on comprend que la conicité des cales soit à son tour insignifiante.

L'invention a pour but de remédier à ces inconvénients et concerne un nouveau type de cales pour rainures de table de machines-outils pouvant être mises en place sans tatonnement et à des niveaux différents, ce qui était jusqu'alors impossible avec les cales connues dont la base devait nécessairement porter dans le fond élargi de la rainure.

Pour ce faire, la cale , selon l'invention, est constituée d'un bloc sensiblement parallélipipédique possédant deux faces rigoureusement parallèles, l'une pour prendre appui sur l'une des parois de la rainure en T de la table, l'autre pour servir de plan de référence à la pièce à usiner, ce bloc étant pourvu d'un talon servant de support à une came rotative sur un axe excentré.

Selon un mode de réalisation préférentiel, le talon forme un décrochement en saillie sur la face de la cale opposée à celle prenant appui sur la paroi de la rainure en T de la machine-outil, l'épaisseur dudit décrochement étant légèrement inférieur à la largeur d'entrée de la rainure.

De façon avantageuse la came est en forme de secteur et est solidaire de l'axe rotatif excentré, cette came pouvant prendre deux positions, l'une escamotée, ou elle est en retrait du talon, l'autre en saillie, ou elle déborde de ce même talon et prend appui sur la paroi de la rainure opposée à celle contre laquelle s'applique la face rectiligne de la cale.

D'autres caractéristiques et avantages de l'invention ressortiront de la description ci-après et des dessins annexés dans lesquels :
- la figure 1 est une vue en plan, de face de la cale,
- la figure 2 est une vue de gauche de la figure 1,
- la figure 3 est une vue de dessus de la figure 1,
- les figures 4 et 5 sont des vues illustratives montrant la fixation de la cale, à des niveaux différents, dans une rainure en T de machine-outil.

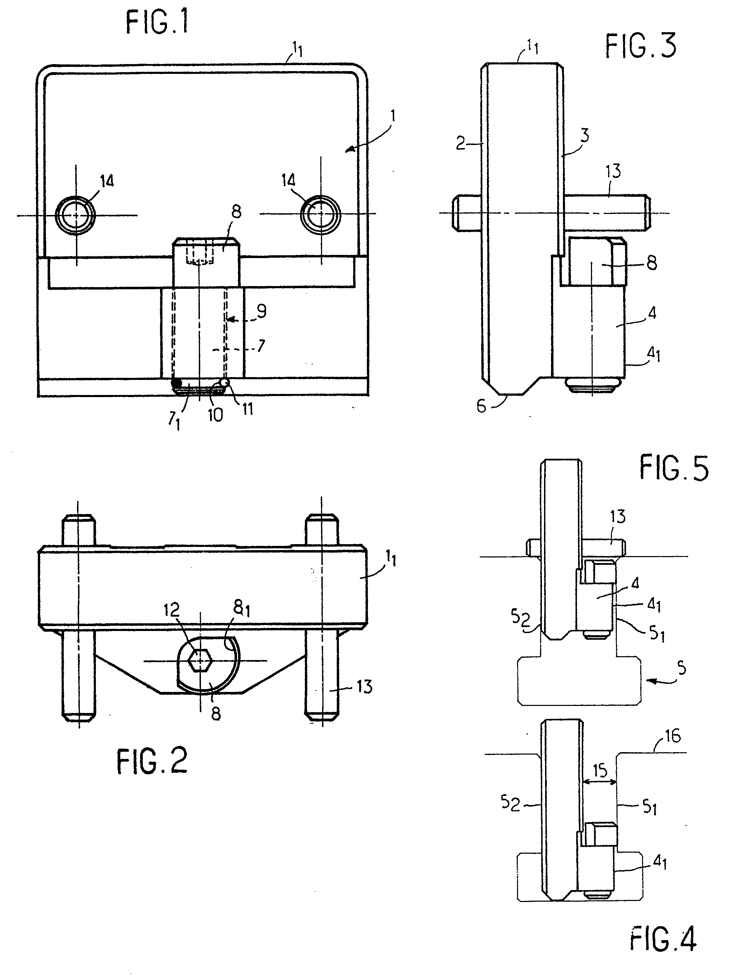

La came illustrée sur les figures de 1 à 3 est constituée essentiellement d'un bloc métallique, de forme sensiblement parallélipipédique, dont les deux faces principales 2 et 3 sont rigoureusement parallèles, la face antérieure 3 étant pourvue d'un talon 4 en saillie dont la largeur est légèrement inférieure à celle de l'entrée $5_1$ de la rainure globalement désignée par la référence 5 (figure 5 notamment).

L'autre face 2, dite face postérieure est rectiligne afin de venir épouser la paroi $5_2$ de la rainure 5 (figures 4 et 5). La base $4_1$ du talon 4 est légèrement en retrait de celle de la cale 1 qui comporte une nervure 6 de forme trapézoïdale, ce décrochement étant nécessaire à la rotation de l'axe 7 portant la came 8 assurant le verrouillage de la cale dans la rainure 5 de la table de la machine-outil.

La came 8 est solidaire de l'axe rotatif 7 logé dans un orifice circulaire 9 traversant de part en part, dans le sens de la hauteur, le talon 4.

L'extrêmité inférieure $7_1$ de l'axe 7 est pourvue d'une gorge annulaire 10 destinée à recevoir un jonc ou circlips 11 immobilisant l'axe 7 en direction axiale mais autorisant par contre sa rotation. L'autre extrêmité de ce même axe 7 est pourvue de la came 8 se présentant, comm visible en figure 2, sous la forme d'un secteur excentré. Ainsi cette came 8 peut prendre deux positions : l'une escamotée (figure 2) et dans ce cas la portion prohéminente $8_1$ de cette came est en retrait sur le talon 4, l'autre en saillie (positionnement de verrouillage) ou cette même portion prohéminente $8_1$ déborde du bord vertical $4_1$ du talon 4 comme visible sur les figures de 3 à 5. La came 8 est entraînée d'une position à l'autre par le jeu d'une clé Allen dont l'extrêmité est introduite dans un trou borgne 12, à six pans creux, ménagé dans la came 8. La mise en place de cette came dans la rainure 5 d'une table de machine-outil est d'une grande simplicité puisqu'il suffit d'amener la came 8 en position escamotée, comme décrit ci-dessus, pour pouvoir la faire glisser dans l'entrée

$5_1$ de la rainure 5. On notera à ce sujet que la largeur cumulée de la cale 1 et de son talon 4 est très légèrement inférieure à la largeur $5_1$ de la rainure 5, la came excentrée 8 ayant essentiellement pour but de rattraper le jeu existant entre la cale et la rainure.

Cette cale peut être utilisée avec des broches 13 de positionnement si l'on veut notamment l'amener à des niveaux différents, comme illustré en figure 5. Pour ce faire, la cale 1 est traversée de part en part dans son épaisseur par des orifices circulaires 14 ayant un diamètre égal à celui des broches 13, ces dernières étant d'une longueur supérieure à la largeur d'entrée $5_1$ de la rainure 5 de manière ce que les deux extrêmités des broches considérées puissent venir reposer sur les bords opposés de cette rainure. De la sorte on immobilise la cale à une hauteur supérieure à celle qu'elle a lorsqu'elle est utilisée sans broche comme illustré en figure 4. Ce positionnement de la cale à un niveau supérieur, tel que celui visible en figure 5, peut présenter de l'intérêt lorsque l'on veut par exemple surélever la pièce à usiner de manière à ce qu'elle ne soit plus en contact avec la surface de la table. Dans ce cas, les cales 1 disposées dans les rainures séparées d'une même table d'une machine-outil constituent des pieds ou pions.dont le sommet $1_1$ servira de surface de repos à la pièce à usiner bridée par ailleurs par des dispositifs de serrage. Bien entendu, afin que l'on conserve un parallélisme rigoureux entre le plan horizontal de la table et le plan horizontal de la pièce à usiner, on fera en sorte que les orifices 14 qui reçoivent les broches amovibles 13 soient disposés dans un parfait alignement horizontal.

La cale conforme à l'invention est non seulement d'une fabrication et d'une mise en place très simplifiée par rapport aux cales connues mais de surcroit peut-être utilisée comme démontré ci-dessus à des niveaux différents pour permettre le bridage de pièces à usiner dans des positions également différentes. En outre, la partie émergente de la cale 1, faisant saillie par rapport au plan de la table, et formant butée est d'une largeur très sensiblement inférieure à celle de l'entrée de la rainure 5, ce qui constitue un couloir de dégagement 15 (figure 4) pour le passage d'un outil par exemple d'une petite fraise si l'on veut usiner le champ de la pièce.

Enfin,les deux faces antérieure et postérieure 3 et 2 de la cale 1 étant rigoureusement parallèles, on obtient deux plans de référence, la pièce pouvant indifféremment être bridée à gauche ou à droite de la cale.

## Revendications

1. Cale pour rainure de table de machine-outil servant au positionnement, à des niveaux différents, d'une pièce à usiner par rapport à un outil d'usinage, cale caractérisée en ce qu'elle comporte au moins une face de référence (2), rigoureusement perpendiculaire au plan de la table de la machine-outil, par rapport auquel elle fait saillie, cette face étant en appui sur l'une des parois ($5_2$) de la rainure considérée (5) et sa partie émergeant de la rainure servant de butée à la pièce à usiner, ladite cale étant d'une largeur sensiblement inférieure à celle de l'entrée de la rainure (5) mais comportant sur la face (3), opposée à celle de référence (2), un talon (4) sur lequel est monté une came rotative (8) à excentrique susceptible de venir en appui sur la paroi ($5_1$) de la rainure, opposée à celle ($5_2$) sur laquelle est appliquée ladite face de référence (2).

2. Cale selon la revendication 1 caractérisée en ce qu'elle comporte une seconde face de référence ($1_1$) perpendiculaire à la première face de référence (2).

3. Cale selon la revendication 1 caractérisée en ce que le talon (4) forme un décrochement en saillie sur la face antérieure (3) de la cale, opposée à celle de référence (2) prenant appui sur la paroi ($5_2$) de la rainure en T de la machine-outil, l'épaisseur dudit décrochement étant inférieur à la largeur d'entrée ($5_1$) de la rainure (5).

4. Cale selon la revendication 1 caractérisée en ce que le talon (4) est traversé dans sa hauteur par un axe (7) pourvu à une de ses extrêmités d'une gorge (10) destiné à recevoir un circlips (11) d'immobilisation axiale de l'axe, son autre extrêmité étant pourvue de la came à excentrique (8).

5. Cale selon l'une quelconque des revendications de 1 à 4 caractérisée en ce que la came (8) est en forme de secteur et est solidaire de l'axe rotatif excentré (7), cette came pouvant prendre deux positions l'une escamotée, ou elle est en retrait du bord extérieur du talon (4), l'autre en saillie ou elle fait saillie sur ce même talon et prend appui sur la paroi ($5_1$) de la rainure 5 opposée à celle ($5_2$) contre laquelle s'applique la face de référence (2) de la cale.

6. Cale selon la revendication 1 caractérisée en ce que son extrêmité inférieure est pourvue d'une nervure (6) en saillie par rapport à la base ($4_1$) du talon (4) pour permettre la rotation de la came à excentrique (8).

7. Cale selon l'une quelconque des revendications 1 à 6 caractérisée en ce que la came (8) comporte un trou borgne (12) à six pans creux pour le passage d'une clé Allen.

8. Cale selon la revendication 2 caractérisée en ce qu'elle est traversée dans son épaisseur par au moins deux orifices (14) dans lesquels peuvent être introduites des broches (13) dont la longueur est supérieure à la largeur d'entrée ($5_1$) des rainures en T (5), les extrêmités de ces broches venant reposer sur les bords opposés desdites rainures (5) pour surélever la seconde face de référence ($1_1$).

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 252 166  (ARNOLD)<br>* Page 7, lignes 32-37; page 8; figures 9-11 * | 1,2,5,6 | B 23 Q  16/00<br>B 23 Q   3/10 |
| A | --- | 3,4,8 | |
| A | CH-A-  229 632  (DIXI)<br>----- | | |

DOMAINES TECHNIQUES
RECHERCHES (Int. Cl.4)

B 23 Q  16/00
B 23 Q   3/00

Le présent rapport a été établi pour toutes les revendications

| Lieu de la recherche | Date d'achèvement de la recherche | Examinateur |
|---|---|---|
| LA HAYE | 11-11-1988 | BOGAERT F.L. |

EPO FORM 1503 03.82 (P0402)